# EUROPEAN PATENT SPECIFICATION

(11) **EP 2 323 520 B1**
(45) Date of publication and mention of the grant of the patent: **22.02.2012**
(21) Application number: 09786902.8
(22) Date of filing: 11.08.2009
(51) Int. Cl.: A47J 25/00

(54) **MANUAL CORE REMOVER AND USES THEREOF**
MANUELLER KERNENTFERNER UND VERWENDUNG
DISPOSITIF DE RETRAIT MANUEL DE TROGNON ET UTILISATIONS CORRESPONDANTES

(30) Priority: 11.08.2008 US 188340 P; 12.07.2009 US 224870 P
(43) Date of publication of application: 25.05.2011
(73) Proprietor: Tweg, Edward, 72406 Ramle (IL)
(72) Inventor: Tweg, Edward, 72406 Ramle (IL)
(74) Representative: Cabinet Plasseraud
(86) International application number: PCT/IB2009/053539
(87) International publication number: WO 2010/018543

(56) References cited:
- WO-A-2004/045348
- US-A- 2 117 278
- US-A- 2 188 362
- US-A- 2 263 531
- US-A1- 2003 037 440
- US-A1- 2007 294 894

## Description

The present invention relates to a manual core remover which can be used in restaurants and/or domestic kitchens, which enables to fast and easily remove the cores of, or making a cavity in a variety of food products, such as vegetables, fruits, cheeses, tofu, bread loaves and other edibles and uses thereof.

Stuffed food is a gourmet food that typically requires plenty of time to prepare. It requires a knack to create the cavity and is often the work of a chef or an experienced cook. Stuffed foods, in this context are food products consisting of one food that is filled with another kind of food. For example, squashes such as zucchini or courgette, or pepper filled by a stuffing that may include minced (ground) meat an/or mixtures of onion, breadcrumbs, spices dried fruit, eggplant, and the like, apples filled with cheese or minced meat, and many other combinations of receptacle/stuffing food combinations.

At present, for preparing a stuffed food, it necessary to use various kitchen tools and much efforts for removing the contents of the bore.

US 2003/037440 discloses an apparatus for creating cavities in edible material, comprising a cylindrical hollow tube having a distal end that is adapted to serve as a cutting edge; and a core removal blade extending inward from the cutting edge part way across the tube.

Although handheld tools of the prior art, including the manual device described above makes it possible to create cavities in foodstuff, there is a need for manual tools with improved qualities, particularly as regards the number of tools used and the speed for preparing stuffed food.

It is an object of the present invention to provide a tool that can cut out and remove material from a foodstuff to create a cavity therein.

It is a further object that the tool enables clearly defined edges to the opening of the cavity, with easy removal of foodstuff from the cavity.

Now the applicant has designed a new type of core remover which is provided with a retractable blade.

It has been noted in a surprising and unexpected fashion that the use of the new type of core remover of the invention allows the core remover to fast, easily and efficiently core food products to the suitable core or plug size and depth and to remove the core completely in one piece and in one action.

Unless otherwise defined, all technical and scientific terms used herein have the same meaning as commonly understood by one of ordinary skill in the art to which this invention belongs.

A subject of the present application is therefore a core remover for creating cavities in edible materials, wherein said core remover comprises:
- a cylindrical hollow tube or a groove (gutter or channel) having a distal end that is adapted to serve as a cutting edge and a proximal end, also hereinafter named as "main cutting body",
- one or several core removal blades extending inward from the interior surface of the hollow tube or groove part way across the tube or groove, said core removal blades being joined by an axis to the interior surface of the hollow tube or groove for allowing the core removal blade(s) to rotate relative to the cylindrical hollow tube or groove about the said axis according to an angle of rotation of about 90° from the wall of the hollow tube or groove.

According to a particular embodiment, the core remover for creating cavities in edible materials comprises a preferably cylindrical hollow tube.

In another embodiment, the core remover for creating cavities in edible materials comprises a groove instead, i.e. a lengthwise section of a cylinder. In comparison with the 360° angle at the centre of a hollow tube, the transversal section of a groove may correspond to an angle at the centre of 50 to 300 °, preferably 70 to 250 °, more preferably 80 to 200 °, particularly 80 to 180°, most particularly 80 to 150°. It will be appreciated that the lower the angle, the more flexibility is available for cutting different shaped cavities from the foodstuff, i.e. the core to be cut away and removed may vary more substantially from a cylinder.

Preferably, the core remover includes a handle fixed to a proximal end of the hollow tube or groove. More preferably, the proximal end of the hollow tube or groove is connected to the handle by a spacer part having preferably the shape of a groove. Said spacer provides a space between the main cutting body and the handle and may have a cross section similar to that of the distal end of the cylindrical hollow tube or groove.

Preferably, the core removal blade(s) extend(s) inward about half way across the hollow tube, and most preferably more than half way across the hollow tube (or the equivalent diameter of the groove). More particularly, the core removal blade is generally perpendicular to a longitudinal axis of the cylindrical hollow tube or groove, in active position.

In accordance with preferred embodiments, the core remover of the present invention may be made in different sizes and with different cutting characteristics, depending on the specific intended application.

Under preferred conditions for implementing the cutting characteristics of the invention, the cutting edge is sharpened for ease of insertion into the foodstuff. Optionally the cutting edge is a serrated edge, for example a crooked sharp edge, a saw-tooth edge or a wave-shaped structure.

Under other preferred conditions for implementing the invention, the outer (convex) surface of the hollow tube or groove is provided with impressed or grooved marks to enable the user to gage the depth of penetration. The marks help to obtain a cavity of a desired depth.

The core removal blade(s) are joined by an axis which is a bearing to the interior surface of the hollow tube or groove. The joint or bearing is preferably a hinge or pivot. The hinge or pivot connects the core removal blade(s) to the distal end of the cylindrical hollow tube or groove, allowing only a limited angle of rotation of about 90° between them. The core removal blade(s) are allowed to rotate relative to cylindrical hollow tube or groove about the above fixed axis of rotation which is the geometrical axis of the hinge. It advantageously comprises a spring helping the blade(s) to reach the cutting active position where the blade(s) extend inward from the interior surface of the hollow tube or groove part way across the tube or groove.

In other preferential conditions, the shape of the core removal blade(s) is about triangular. The core removal blade is preferably triangular with a rounded corner opposite to the hinge. One of the sides is used as the joint and the two other sides or preferably one of the two other sides are (is a) cutting edge(s). In an even more particular manner, the cutting side(s) is twisted, that is bent. The cutting side of the core removal blade(s) defines a plane forming an angle with regards the main part of the blade. Therefore, upon turning the device in the direction of the core removal blade(s), because of the twisted edge of the core removal blade, turning the handle causes the core removal blade to change its position from a tangential inactive position to the radial active position.

Under preferred conditions for implementing the invention, the aforementioned cylindrical hollow tube or groove is made of hard plastic material and particularly of metal or alloy such as aluminium, chromium, steel and quite particularly stainless steel. Preferably, the hollow tube or groove, the handle and the spacer part (where provided) are made one-piece.

Under other preferred conditions for implementing the invention, the cylindrical hollow tube or groove will have an inner diameter of between 0.5 and 10 cm, preferably between 1 and 6 cm, more preferably between 1.5 and 4 cm.

Under yet other preferred conditions for implementing the invention, the above core remover is provided with one or several (preferably 2 or 3) mechanical core ejector(s). According to a particular embodiment, the core ejector(s) comprise(s) a spring blade extending inward from the interior surface of the hollow tube or groove.

The manual core remover of the invention has advantageous qualities.

It allows the creation of a cavity of a desired size in food products, and detaches walls (main cutting body) and base (core removal blade(s)) of the flesh to be removed (scrap) from the outer part (receptacle for stuffing) and, in some applications, may facilitate removal of the flesh completely in one piece in a single operation.

The resulting plug of scrap material is easily removed at the end of the operation leaving the cavity ready for stuffing.

The manual core remover of the invention can be used for cutting decorated openings in food in the preparation of stuffed food. More particularly, the manual core remover of the invention allows a fast, easy and efficient coring of food products, with control of the bore size and depth. The core may usually be completely removed in one piece and in one action, to provide the desired cavity with one aperture for filling the resultant food container or receptacle.

In contrast with the prior art, it is no longer necessary to use a variety of knives and coring tools, scoops and spoons to create cavities in a fruit or vegetable. Far less effort is required than previously. The core of vegetables, fruit and other edibles, such as potatoes, apples, etc. may be removed in one piece to create a cavity for subsequent stuffing. Since the flesh is removed in one piece, a single piece lid may be replaced. Thus it will be appreciated that the present device saves the need for using a variety of tools for a coring operation and saves time.

It will be appreciated that the device may be manufactured in various sizes or diameters for different needs and applications and may be provided as a set of corer tools.

The manual core remover of the invention can advantageously be used for the preparation of food ready for stuffing.

The manual core remover of the invention allows removing all the stump of cabbage releasing all leaves free for peeling. It allows the coring of carrots while keeping core in one piece for easy removal. Similarly the green stump of a tomato is easily removed before cutting for salad or peeling.

The use of the present manual core remover is very simple.

The cutting edge of the cylindrical hollow tube or groove is pushed into the food product to the desired depth, optionally with the assistance of marks impressed or grooved at the outer of the device. During this step, the core removal blade(s) do not extend inward from the interior surface of the hollow tube or groove but lie along the interior surface of the hollow tube or groove in the direction of the handle.

Upon reaching the desired depth, the operator rotates the manual core remover, which causes the core removal blade(s) to change its (their) position flat along the shaft, to a radially extending position, substantially perpendicular to the wall of the hollow tube or groove.

Further rotating the manual core remover causes the core removal blade(s) to cut through the flesh of the foodstuff, detaching the bottom part of the core from the foodstuff.

The cylindrical hollow tube or groove is pulled out of the food product. The sole or the several core removal blades extending inward from the interior surface of the hollow tube or groove part way across the tube allow the extraction of the core or plug out of the food product.

Since the tool is pulled out of the food item along with the material captured in it, an empty space with the desired depth and width suitable for example for filling is thus created in the edible material.

A further object of the present invention is therefore a method for creating a hole in edible material, including:
- bringing a core remover as described herein;
- pressing the hollow tube or groove of the core remover into the edible material to reach the desired depth;
- rotating the hollow tube or groove or the handle if any, so as to cause the core removal blade(s) to change its position along the wall of the hollow tube or groove to a radial position and to make a generally cylindrical cut through the edible material; and
- withdrawing the core remover so as to pull out a portion of the material (that is within the tube in the case of a hollow tube).

Preferred conditions for implementing the core removers described above also apply to the other subjects of the invention envisaged above, particularly to the method for creating a hole in edible material.

The scope of the invention can be understood better by referring to the description given below, the aim of which is to explain the advantages of the invention.
Figure 1 is a schematic illustration of an isometric perspective view of a core remover 10 of the present invention provided with a hollow tube having a distal end that is adapted to serve as a cutting edge.
Figure 2 is a schematic illustration of an isometric perspective view of the other face of a core remover 10 of the present invention. This variant comprises two cutting blades.
Figure 3 is a schematic illustration of an isometric perspective view of a core remover 10 of the present invention provided with a groove in lieu of a hollow tube having a distal end that is adapted to serve as a cutting edge.
Figure 4 is a variant of Figure 3 wherein the core removal blade is in inactive position against the inside surface of the core remover.
Figure 5 is perspective view of a core removal blade.
Figure 6 is perspective view of a core removal blade with a hinge of different type
Figure 7 illustrates a possible cooperation between the core removal blade of Figure 5 and the main cutting body 11.
Figures 8, 9, 10 and 11 are perspective views of core removal blades with a hinge of the two different types of Figures 5 and 6, in active i.e. cutting position (Figures 8 and 10) and inactive position (Figures 9 and 11).

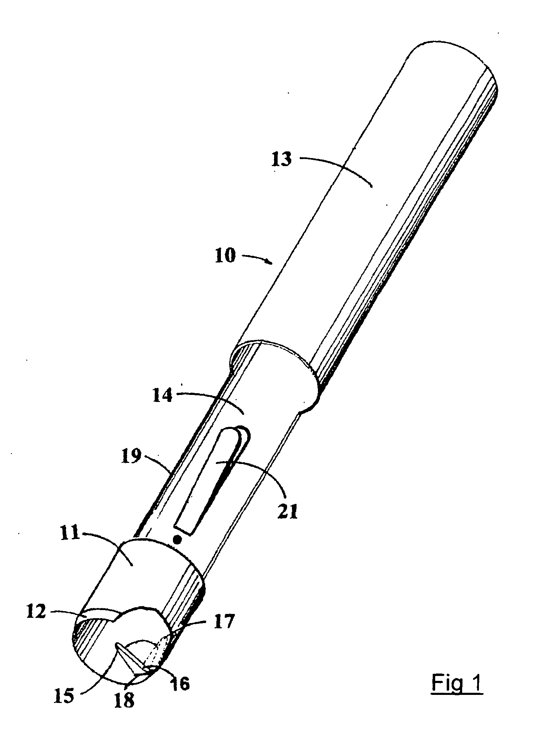

On Figure 1, the main cutting body 11 of the present invention is a pipe-shaped, hollow tube with a sharp cutting edge 12 along the circumference of the distal end of the tube. The transversal section of the sharp edge 12 is a triangle. The proximal end of the main cutting body 11 is connected to a spacer part 19 having the shape of a groove having the same diameter as the main cutting body 11, which provides a space 14 between the main cutting body 11 and the handle 13. The spacer part 19 joins the main cutting body 11 and the handle 13. The space 14 is used for removing the plug or core extracted from the food material. The elastic spring blade 21 assists to expel the plug or core out of the space 14.

Nearby the sharp cutting edge 12, on the inside of the cutting body 11, one core removal blade 15 is provided. The core removal blade 15 is joined by a hinge placed in the circumference axis 18 to the inside surface of the main cutting body. Hinge 18 enables the 90 degrees rotation of the core removal blade 15 between two extreme positions. In a first position (dotted position 17), during the introduction of the core remover into the food material the core removal blade 15 lies against the inside arched surface of the cutting body. In a second position (position represented on the figure), the core removal blade 15 is radial, i.e. perpendicular to the interior surface of the cutting body. The core removal blade 15 is triangular with a rounded corner opposite to the hinge 18. One side of the triangular core removal blade 15 has a twisted, bent side surface 16. The bent surface 16 enables the triangular core removal blade 15 to screwingly cut through the cored material on rotation of the tool, thereby causing the removal blade 15 to assume the radially extending position 17.

The main cutting body 11, the handle 13 and the spacer part 19 are made one-piece in stainless steel. An elastic spring blade 21 is a separate piece fastened to the spacer part 19 by its distal end. It allows the easy ejection of a core of edible material. It additionally may allow a long core of edible material to come over the handle without being stopped by the handle. The elastic spring blade 21 is a tongue of material connected at its distal end to the spacer 19 said spring blade 21 being provided to protrude into the cavity 14 below the handle and above the main cutting body 11.

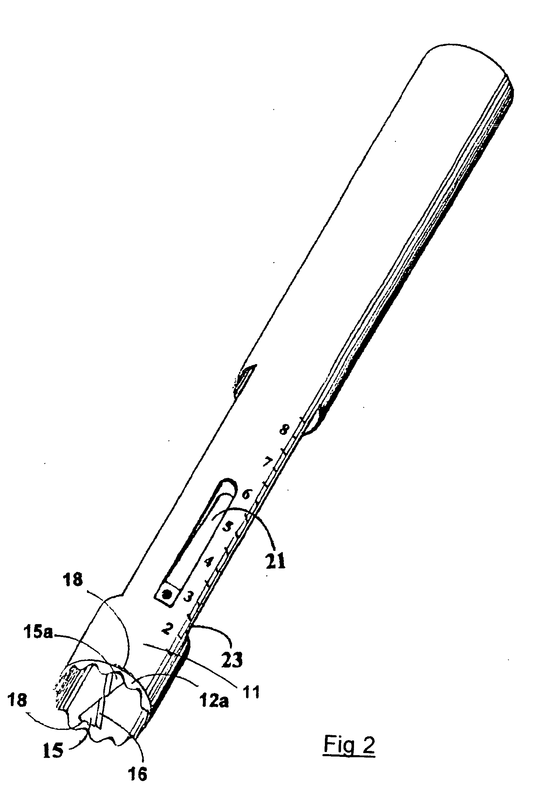

The variant of Figure 2 shows two core removal blades 15, 15a. One core removal blade 15 is opposite to the other core removal blade 15a. The sharp cutting edge 12 is a wavy sharp cutting edge 12a. Marks 23 that are impressed on the back, allow measuring the insertion depth into the food product.

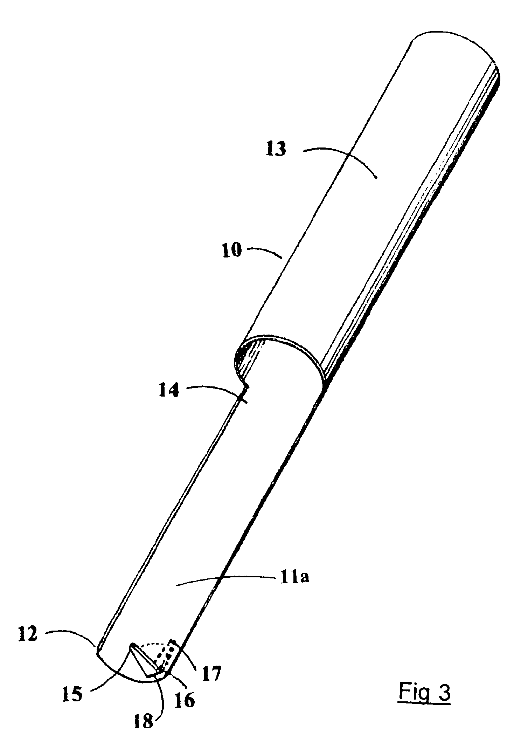

The variant of Figure 3 shows a core remover 10 of the present invention provided with a groove 11 A in lieu of a hollow tube 11 as a main cutting body, having a distal end that is adapted to serve as a cutting edge 12.

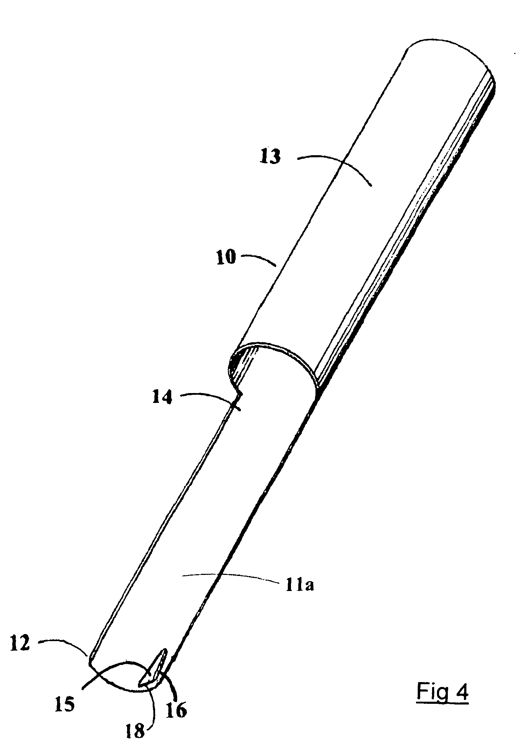

In Figure 4 the core removal blade 15 is in inactive position, lying against the inside surface of the main cutting body 11.

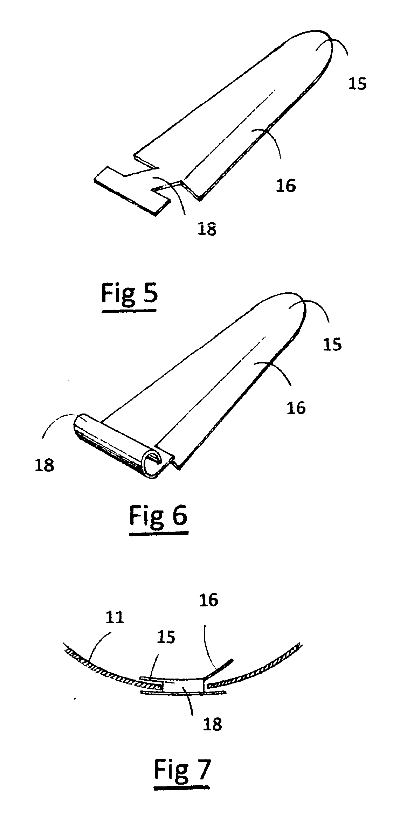

Figure 5 is perspective view of a core removal blade 15 of generally triangular shape. The cutting side 16 of the core removal blade(s) is twisted i.e. is bent and therefore defines a plane forming an angle with regards the main part of the blade 15. This feature has as effect that rotation of the tool causes the cutting side 16 to screw into the foodstuff, pulling the blade 15 into its radially extending active position. A T-shape part provides a hinge, in combination with holes (not shown) of the main cutting body 11.

Figure 6 is a perspective view of another core removal blade. The hinge side of the core removal blade 15 is curled up for providing a pin housing 18a, in combination with studs extending from the main cutting body 11.

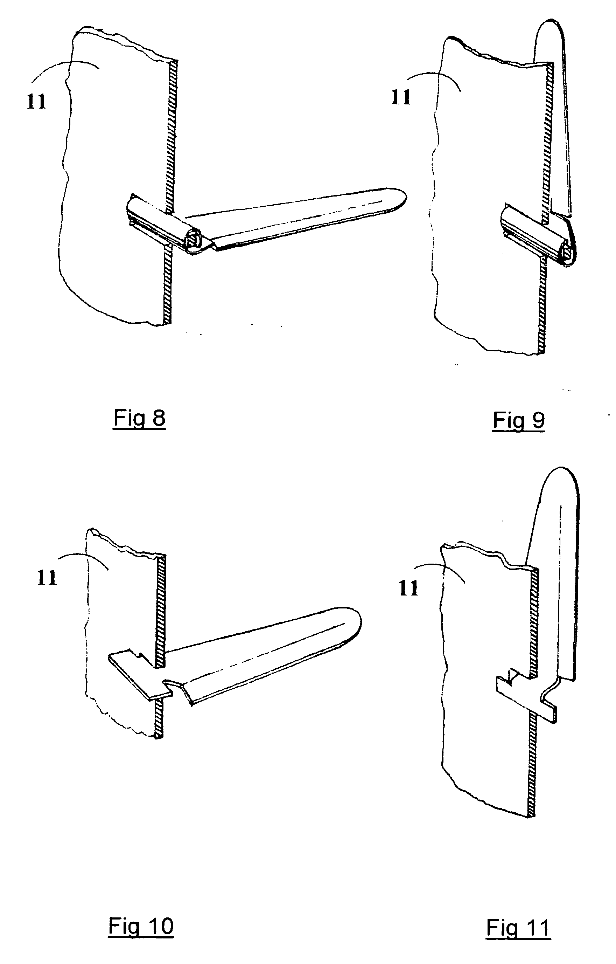

Figure 7 is a perspective view of a core removal blade of Figure 5 whose T-shaped hinge side is inserted into a slit across the main cutting body 11. Rotating the core remover 10 anticlockwise, allows the edible material to press the bent side 16 which pushes the blade 15 towards the wall of the cutting section 19. Rotating the core remover 10 clockwise causes the blade to engage the flesh of the foodstuff and urges the bent side 16 of the blade 15 to enter into the edible material and progressively turn to its active cutting position (see Figures 8 and 10) for cutting the base of the core. Reverse mounting is, of course possible, but is counter-intuitive and thus not generally desirable, even for most left-handed chefs.

Figure 8 is a perspective view of a core removal blade of Figure 6 mounted in a main cutting body 11, in active (cutting) position.

Figure 9 is a perspective view of a core removal blade of Figure 6 mounted in a main cutting body 11, in inactive position.

Figure 10 is a perspective view of a core removal blade of Figure 5 mounted in a main cutting body 11, in active (cutting) position.

Figure 11 is a perspective view of a core removal blade of Figure 5 mounted in a main cutting body 11, in inactive position.

## Claims

1. A core remover for creating cavities in edible materials, wherein said core remover comprises:
- a main cutting body comprising a cylindrical hollow tube (11) or groove (11 A) having a distal end that is adapted to serve as a cutting edge and a proximal end,
- one or several core removal blades (15) extending inward from the interior surface of the hollow tube (11) or groove (11 A) part way across the hollow tube (11) or groove (11 A), said core removal blades being joined by an axis (18) to the interior surface of the hollow tube (11) or groove (11 A) for allowing the core removal blade(s) to rotate relative to the cylindrical hellow tube (11) or groove (11 A) about the said axis according to an angle of rotation of about 90 ° from the wall of the hollow tube (11) or groove (11A).

2. A core remover according to claim 1, wherein the main cutting body comprises a cylindrical hollow tube (11).

3. A core remover according to claim 1, wherein the main cutting body comprises a groove (11 A).

4. A core remover according to any one of claims 1 to 3 , wherein said core remover comprises a handle (13) fixed to a proximal end of the hollow tube (11) or groove (11 A).

5. A core remover according to claim 4, wherein the proximal end of the hollow tube (11) or groove (11 A) is connected to the handle (13) by a spacer part (19).

6. A core remover according to any one of claims 1 to 5 , wherein the core removal blade(s) (15) extend(s) inward about half way across the hollow tube (11) or across the equivalent diameter of the groove (11 A).

7. A core remover according to any one of claims 1 to 6 , wherein the core removal blade(s) (15) are joined by a hinge or pivot (18) to the interior surface of hollow tube (11) or groove (11 A).

8. A core remover according to any one of claims 1 to 7 , wherein the shape of the core removal blade(s) is about triangular and wherein one of the sides of the core removal blade(s) (15) is used as a joint and one or the two other sides are (is a) bent cutting side (s).

9. A core remover according to any one of claims 1 to 8 provided with one or several mechanical core ejector(s) (21).

10. A method for creating a hole in edible material, including:
- bringing a core remover of one of claims 1 to 9;
- pressing the hollow tube (11) or groove (11 A) of the core remover into the edible material to reach the desired depth;
- rotating the hollow tube (11) or groove (11 A), so as to cause the core removal blade(s) (15) to change its position along the wall of the hollow tube (11) or groove (11 A) to a radial position and to make a generally cylindrical cut through the edible material; and
- withdrawing the core remover so as to pull out a portion of the material.

## Patentansprüche

1. Kernentferner zum Erzeugen von Hohlräumen in essbaren Materialien, wobei der Kernentferner umfasst:
- einen Hauptschneidkörper mit einem zylindrischen hohlen Rohr (11) oder einer Nut (11A) mit einem distalen Ende, das so ausgelegt ist, dass es als Schneidkante dient, und einem proximalen Ende,
- eine oder mehrere Kernentfernungsklingen (15), die sich von der inneren Oberfläche des hohlen Rohrs (11) oder der Nut (11A) eine Teilstrecke über das hohle Rohr (11) oder die Nut (11A) nach innen erstrecken, wobei die Kernentfernungsklingen durch eine Achse (18) mit der inneren Oberfläche des hohlen Rohrs (11) oder der Nut (11A) verbunden sind, um zu ermöglichen, dass sich die Kernentfernungsklinge(n) relativ zum zylindrischen hohlen Rohr (11) oder zur Nut (11A) um die Achse um einen Drehwinkel von etwa 90° von der Wand des hohlen Rohrs (11) oder der Nut (11 A) dreht (drehen).

2. Kernentferner nach Anspruch 1, wobei der Hauptschneidkörper ein zylindrisches hohles Rohr (11) umfasst.

3. Kernentferner nach Anspruch 1, wobei der Hauptschneidkörper eine Nut (11A) umfasst.

4. Kernentferner nach einem der Ansprüche 1 bis 3, wobei der Kernentferner einen Griff (13) umfasst, der an einem proximalen Ende des hohlen Rohrs (11) oder der Nut (11 A) befestigt ist.

5. Kernentferner nach Anspruch 4, wobei das proximale Ende des hohlen Rohrs (11) oder der Nut (11A) mit dem Griff (13) durch einen Abstandhalterteil (19) verbunden ist.

6. Kernentferner nach einem der Ansprüche 1 bis 5, wobei die Kernentfernungsklinge(n) sich etwa die halbe Strecke über das hohle Rohr (11) oder über den äquivalenten Durchmesser der Nut (11 A) nach innen erstreckt (erstrecken).

7. Kernentferner nach einem der Ansprüche 1 bis 6, wobei die Kernentfernungsklinge(n) (15) durch ein Gelenk oder einen Drehzapfen (18) mit der inneren Oberfläche des hohlen Rohrs (11) oder der Nut (11A) verbunden ist (sind).

8. Kernentferner nach einem der Ansprüche 1 bis 7, wobei die Form der Kernentfernungsklinge(n) etwa dreieckig ist und wobei eine der Seiten der Kernentfernungsklinge(n) (15) als Gelenk verwendet wird und eine oder die zwei anderen Seiten (eine) gebogene Schneidseite(n) ist (sind).

9. Kernentferner nach einem der Ansprüche 1 bis 8, der mit einem oder mehreren mechanischen Kernauswerfer(n) (21) versehen ist.

10. Verfahren zum Erzeugen eines Lochs in essbarem Material, das umfasst:
- Erbringen eines Kernentferners nach einem der Ansprüche 1 bis 9;
- Pressen des hohlen Rohrs (11) oder der Nut (11A) des Kernentferners in das essbare Material, um die gewünschte Tiefe zu erreichen;
- Drehen des hohlen Rohrs (11) oder der Nut (11A), um zu bewirken, dass die Kernentfernungsklinge(n) (15) ihre Position entlang der Wand des hohlen Rohrs (11) oder der Nut (11A) in eine radiale Position ändert (ändern), und um einen im Allgemeinen zylindrischen Schnitt durch das essbare Material zu machen; und
- Zurückziehen des Kernentferners, um einen Teil des Materials herauszuziehen.

## Revendications

1. Vide-trognon permettant de créer des cavités dans des produits comestibles, dans lequel ledit vide-trognon comprend :
- un corps coupant principal comprenant un tube creux (11) cylindrique ou une gouttière creuse (11A) ayant une extrémité distale qui est adaptée pour servir de bord coupant et une extrémité proximale,
- une ou plusieurs lames vide-trognon (15) s'étendant vers l'intérieur à partir de la surface intérieure du tube creux (11) ou de la gouttière creuse (11A) en partie en travers du tube creux (11) ou de la gouttière creuse (11A), lesdites lames vide-trognon étant jointes par un axe (18) à la surface intérieure du tube creux (11) ou de la gouttière creuse (11A) pour permettre à la ou aux lames vide-trognon de tourner par rapport au tube creux (11) cylindrique ou à la gouttière creuse (11A) autour dudit axe selon un angle de rotation d'environ 90 ° à partir de la paroi du tube creux (11) ou de la gouttière creuse (11A).

2. Vide-trognon selon la revendication 1, dans lequel le corps coupant principal comprend un tube creux cylindrique (11).

3. Vide-trognon selon la revendication 1, dans lequel le corps coupant principal comprend une gouttière (11A).

4. Vide-trognon selon l'une quelconque des revendications 1 à 3, dans lequel ledit vide-trognon comprend un manche (13) fixé à une extrémité proximale du tube creux (11) ou de la gouttière creuse (11A).

5. Vide-trognon selon la revendication 4, dans lequel l'extrémité proximale du tube creux (11) ou de la gouttière creuse (11A) est raccordée au manche (13) par une pièce d'espacement (19).

6. Vide-trognon selon l'une quelconque des revendications 1 à 5, dans lequel la ou les lames vide-trognon (15) s'étendent vers l'intérieur d'environ en travers de la moitié du tube creux (11) ou du diamètre équivalent de la gouttière (11A).

7. Vide-trognon selon l'une quelconque des revendications 1 à 6, dans lequel la ou les lames vide-trognon (15) sont jointes par une articulation ou un pivot (18) à la surface intérieure du tube creux (11) ou de la gouttière creuse (11A).

8. Vide-trognon selon l'une quelconque des revendications 1 à 7, dans lequel la forme de la ou des lames vide-trognon est à peu près triangulaire et dans lequel un des côtés de la ou des lames vide-trognon (15) est utilisé comme articulation et un des ou les deux autres côtés est (sont) un (des) côté(s) coupant(s) inclinés.

9. Vide-trognon selon l'une quelconque des revendications 1 à 8, équipé d'un ou plusieurs éjecteurs de trognon mécaniques (21).

10. Procédé de réalisation d'un trou dans une matière comestible, comprenant les étapes consistant à :
- procurer un vide-trognon défini à l'une des revendications 1 à 9 ;
- enfoncer le tube creux (11) ou la gouttière creuse (11A) du vide-trognon dans la matière comestible afin d'atteindre la profondeur souhaitée ;
- faire pivoter le tube creux (11) ou la gouttière creuse (11A), afin de faire changer de position la ou les lames vide-trognon (15) depuis une position le long de la paroi du tube creux (11) ou de la gouttière creuse (11A) vers une position radiale et de réaliser une coupe généralement cylindrique à travers la matière comestible ; et
- retirer le vide-trognon afin d'extraire une partie de la matière.
